Europäisches Patentamt

European Patent Office

Office européen des brevets

(19)

(11) Veröffentlichungsnummer : **0 019 166**
**B2**

(12) **NEUE EUROPÄISCHE PATENTSCHRIFT**

(45) Veröffentlichungstag der neuen Patentschrift :
15.04.87

(51) Int. Cl.⁴ : **B 65 G 33/14**, B 65 G 67/60,
B 65 G 65/22

(21) Anmeldenummer : 80102390.4

(22) Anmeldetag : 02.05.80

(54) **Entladevorrichtung zur Förderung von Schüttgütern.**

(30) Priorität : 02.05.79 CH 4093/79

(43) Veröffentlichungstag der Anmeldung :
26.11.80 Patentblatt 80/24

(45) Bekanntmachung des Hinweises auf die Patenterteilung : 15.06.83 Patentblatt 83/24

(45) Bekanntmachung des Hinweises auf die Entscheidung
über den Einspruch : 15.04.87 Patentblatt 87/16

(84) Benannte Vertragsstaaten :
CH DE FR GB IT LI NL SE

(56) Entgegenhaltungen :
BE-A- 518 788
DE-A- 1 900 801
DE-A- 2 718 584
DE-C- 404 681
GB-A- 968 433
GB-A- 1 356 282
US-A- 2 438 637
US-A- 2 810 553
US-A- 2 870 995
US-A- 3 312 297
US-A- 3 444 940
US-A- 3 685 638
US-A- 3 736 996

(73) Patentinhaber : Gebrüder Bühler AG
CH-9240 Uzwil (CH)

(72) Erfinder : Naef, Peter
Bachmattstrasse 5
CH-9244 Niederuzwil (CH)

(74) Vertreter : Dipl.-Phys.Dr. Manitz Dipl.-Ing., Dipl.-Wirt-
sch. Finsterwald Dipl.-Chem.Dr. Heyn Dipl.-Phys.
Rotermund Morgan, B.Sc.(Phys)
Robert-Koch-Strasse 1
D-8000 München 22 (DE)

Jouve, 18, rue St-Denis, 75001 Paris, France

## Beschreibung

Die Erfindung betrifft eine Entladevorrichtung zur insbesondere etwa senkrechten Förderung von Schüttgütern mit einem zylindrischen Gehäuse, einer sich in diesem drehenden Förderschnecke und einer über das Gehäuse axial vorstehenden, am Eingangsende der Schnecke angeordneten, sich mit dieser zusammen drehenden, sich zur Schnecke hin im wesentlichen konisch erweiternden Einzugsvorrichtung zum Einziehen des Schüttgutes in die Schnecke. Derartige Entladevorrichtungen sind durch die US-A-2 438 637 bekannt und werden insbesondere bei der Schiffsentladung verwendet. Obwohl derartige Fördervorrichtungen insbesondere zum etwa senkrechten Fördern von Schüttgütern bestimmt und geeignet sind, versteht es sich, daß sie auch noch bei mehr oder weniger großen Abweichungen von der senkrechten Förderrichtung befriedigend arbeiten können.

Einzugsvorrichtungen, die außerhalb des Gehäuses angeordnet sind und das Schüttgut in den Wirkungsbereich der Schnecke lenken, erhöhen sowohl die Leistung als auch den Wirkungsgrad der Fördervorrichtung.

Bei einem in der DE-C-1 900 801 beschriebenen Schneckenförderer ist eine als Einzugsvorrichtung dienende Lenkfläche zum Lenken des Fördergutes gegen das Aufnahmeende der Schnecke vorgesehen. Ein beweglicher Teil dieser Lenkfläche ist am Außenumfang eines das Schneckengehäuse koaxial umgebenden, zylindrischen Körpers in der vom Aufnahmeende der Schnecke abgewendeten Richtung, in einem Abstand vom besagten Aufnahmeende fest angeordnet. Dieser bewegliche Teil der Lenkfläche ist in eine von der Schnecke unabhängige Drehung versetzbar und als schraubenförmiger oder spiralförmiger Flügel ausgebildet. Der bewegliche Teil der Lenkfläche ist im Betrieb von einer als offene Kappe ausgebildeten, festen Lenkfläche umgeben, die zugleich das Aufnahmeende der Schnecke umgibt. Das Fördergut wird zunächst nach unten, in der der Förderrichtung der Schnecke entgegengesetzten Richtung bewegt und nach einer durch die feste Lenkfläche bewirkten Umlenkung von 180° von der Schnecke übernommen und in deren Förderrichtung, nach oben befördert.

Diese Vorrichtung weist den Nachteil auf, daß zwei zueinander koaxiale Teile voneinander unabhängig, in entgegengesetzten Richtungen angetrieben werden müssen. Zu diesem Zweck sind zwei Motoren und ein Zahnradgetriebe vorgesehen. Die Lenkflügel ragen in radialer Richtung über den äußeren zylindrischen Körper hinaus, so daß der Raumbedarf in Umfangsrichtung beträchtlich ist. Insgesamt ist die Vorrichtung kompliziert und aufwendig.

Bei einem in der GB-A-968 433 offenbarten Schneckenförderer ragt eine Verlängerung der Schnecke aus dem Gehäuse heraus und dient als Einzugsvorrichtung für das zu fördernde Produkt.

Dieser, ebenfalls als Schnecke ausgebildete Einzugsabschnitt, besitzt dabei eine Steigung, die kleiner als diejenige der im Gehäuse untergebrachten, eigentlichen Förderschnecke ist. Damit wird nur ein Antrieb gebraucht. Die Wirkung des besagten Abschnittes als Lenkfläche für das Gut ist jedoch in vielen Fällen ungenügend und der Schneckenförderer ist bei einer kleinen Schichttiefe des Produktes nicht verwendbar.

Es ist auch schon eine fahrbare, schräggelagerte Förderschnecke bekannt (DE-C-404 681), welche nur für horizontale oder leicht schräg aufwärts geneigte Förderstrecken verwendbar ist. Die bekannte Vorrichtung beruht auf dem Prinzip, daß das Produkt in die Schnecke bzw. das Schneckenrohr hineinrutschen kann, indem eine Rutschfläche an einem Schöpfrad vorgesehen ist. Die bekannte Vorrichtung eignet sich nicht zur im wesentlichen senkrechten Anordnung und Förderung.

Die Einzugsvorrichtung der eingangs genannten US-A-2 438 637 ist als konischer Kopf ausgebildet, der sich mit der Schnecke dreht und mit spiralförmigen Schneidblättern versehen ist. Der konische Kopf stellt somit ebenfalls eine Fortsetzung der Schnecke über das Stirnende des zylindrischen Gehäuses hinaus dar und ist lediglich in der Lage, das am Schlitz der Schneidblätter anfallende Material aufzunehmen.

Aufgabe der Erfindung ist es, eine Entladevorrichtung der eingangs genannten Art zu schaffen, deren Einzugsvorrichtung einfach und wenig aufwendig ist, jedoch zuverlässig und betriebssicher arbeitet und wenig Raum erfordert. Insbesondere soll die Vorrichtung das unterhalb des zylindrischen Gehäuses vorhandene Schüttgut möglichst vollständig erfassen und ohne Verluste dem Eingang der Förderschnecke bzw. des zylindrischen Gehäuses zuführen.

Zur Lösung dieser Aufgabe kennzeichnet sich die Erfindung dadurch, daß die Einzugsvorrichtung mindestens einen Flügel mit einem sich von der Drehachse im wesentlichen in einer Axialebene erstreckenden, eine kontinuierliche Fläche bildenden Antriebssegment und einem sich radial außen an dieses anschließenden Fördersegment besitzt, welches sich vom radial äußeren Ende des Antriebssegmentes entlang einer um die Drehachse gekrümmten, im wesentlichen konischen Fläche in Drehrichtung erstreckt, radial nicht über die Stirnkante des Gehäuses hinausgeht und an dieser mündet, wobei der Konuswinkel bzw. der mittlere Konuswinkel im Verhältnis zur Betriebsdrehzahl so groß ist, daß dem von dem Antriebssegment in Drehung versetzten Schüttgut an dem Fördersegment eine Bewegung in Richtung der Schnecke erteilt wird.

Aufgrund dieser Ausbildung wird das Schüttgut nach kurzer Bewegung ohne Verluste und ohne Umweg unmittelbar in die Schnecke gehoben, indem die Zentrifugalkraft das Schüttgut gegen die Fläche der Fördersegmente drückt und aufgrund der im wesentlichen konischen Form eine Kraftumlenkung in Richtung auf das Eingangsende des zylindrischen Gehäuses erfolgt. Mit ein und derselben Einzugsvorrichtung wird das in ihren Bereich gelangende Schüttgut gleichzeitig in Drehung versetzt und aufgrund der hierdurch erzeugten Zentrifugalkraft in die axiale Richtung zur Förderschnecke hin umgelenkt. Baulich besonders vorteilhaft ist dabei, daß die Einzugsvorrichtung kein zusätzliches Gehäuse und auch keinen zusätzlichen Antrieb benötigt. Die Einzugsvorrichtung beansprucht in axialer Richtung lediglich den zur Ausbildung des Konuswinkels eforderlichen Raum. In radialer Richtung steht sie nirgends über das zylindrische Gehäuse vor. Vorzugsweise schließt sie bündig am Eingangsende des zylindrischen Gehäuses mit diesem ab.

Nach einer vorteilhaften Ausführungsform ist die Fläche des Antriebssegmentes eben, was insbesondere herstellungstechnisch günstig ist. Die Fläche des Antriebssegmentes kann jedoch in einem senkrecht zur Drehachse verlaufenden Querschnitt auch leicht konkav gekrümmt sein, was Stabilitätsvorteile bietet.

Eine besonders bevorzugte Ausführungsform kennzeichnet sich dadurch, daß die Fläche des Fördersegmentes kegelförmig ausgebildet ist, wobei die Drehachse und die Kegelachse zusammenfallen. Hierdurch wird die Funktion der Fläche des Fördersegments ganz auf die Aufgabe, das Schüttgut in die axiale Richtung zur Schnecke hin umzuleiten, begrenzt. Diese Fläche kann aber auch im axialen Schnitt relativ zur Drehachse konkav, vorzugsweise kreisförmig gekrümmt sein, wodurch die Förderkraft am untersten Ende am größten ist und in Richtung des Eintrittsendes des zylindrischen Gehäuses kontinuierlich abnimmt.

Der Übergang des Antriebssegmentes in das Fördersegment kann in einem senkrecht zur Drehachse verlaufenden Querschnitt eckig sein, was zu einer vollständigen Funktionstrennung zwischen Antriebs- und Fördersegmenten führt. Der Übergang kann jedoch auch stetig, insbesondere konkav gekrümmt sein, was Stabilitätsvorteile bietet.

Vorteilhafterweise ist an das vorlaufende Ende des Fördersegmentes ein Vorlaufsegment angeschlossen. Dies kann als Verlängerung des Fördersegmentes ausgebildet sein oder mit diesem in einem senkrecht zur Drehachse verlaufenden Querschnitt einen Winkel bilden derart, daß sein freies Ende weiter von der Drehachse entfernt ist als sein Ansatz am Fördersegment. Die Höhenabmessung des Vorlaufsegmentes kann gleich derjenigen des Fördersegmentes oder kleiner als dieses ausgebildet sein. Das Vorlaufsegment erstreckt sich von dem Fördersegment in Drehrichtung nach außen, so daß es der besseren Zuführung des Materials dient und den Durchsatz erheblich steigert.

Eine vorteilhafte Ausführungsform der Erfindung mit nur einem aus Antriebs- und Fördersegment bestehenden Flügel kennzeichnet sich dadurch, daß auf der dem Flügel abgewandten Seite des Antriebssegmentes zum Ausgleich der durch den Flügel erzeugten einseitigen Kräfte und zur Dämpfung der durch diese bedingten Schwingungen ein Dämpferblech angeordnet ist. Bevorzugt arbeitet die erfindungsgemäße Einzugsvorrichtung jedoch mit zwei oder mehreren Flügeln. Im Falle der Verwendung von zwei Flügeln ist es bevorzugt, daß jedem der Flügel auf der Schneckenwelle eine Schnecke zugeordnet ist, wobei die beiden Schnecken im Gehäuse gemeinsam drehbar gelagert und relativ zueinander in Umfangsrichtung versetzt angeordnet sind.

Nachstehend werden Ausführungsbeispiele der Erfindung anhand der Zeichnung erläutert. Es zeigt

Figur 1 eine Fördervorrichtung mit einer in einem geschnitten dargestellten Gehäuse drehbar angeordneten Schnecke und einer dieser angeschlossenen Einzugsvorrichtung in perspektivischer Darstellung,

Figur 2 eine Einzugsvorrichtung mit ebenen Antriebssegmenten und konkaven Fördersegmenten in perspektivischer Darstellung,

Figur 3 eine Einzugsvorrichtung mit konkaven Antriebs- und Fördersegmenten in perspektivischer Darstellung,

Figur 4 eine Einzugsvorrichtung mit an die Fördersegmente angeschlossenen Vorlaufsegmenten in perspektivischer Darstellung,

Figur 5 eine Einzugsvorrichtung mit einer Variante der Vorlaufsegmente in perspektivischer Darstellung,

Figur 6 eine der Fig. 1 ähnliche Fördervorrichtung mit einer Zusatzschneckenwindung in perspektivischer Darstellung,

Figur 7 eine Einzugsvorrichtung mit im Längsschnitt konkav gekrümmten Fördersegmenten in perspektivischer Darstellung,

Figur 8 eine Einzugsvorrichtung mit nur einem Flügel, einem Vorlaufsegment und einem Dämpfungsblech in perspektivischer Darstellung,

Figur 9 eine Draufsicht auf die Einzugsvorrichtung nach den Fig. 1 oder 7,

Figur 10 eine Draufsicht auf die Einzugsvorrichtung nach der Fig. 3,

Figur 11 eine Draufsicht auf eine Variante der Einzugsvorrichtung nach der Fig. 3, und

Figur 12 eine Einzugsvorrichtung mit einer Variante des Antriebssegmentes in perspektivischer Darstellung.

In den Figuren sind gleiche Teile mit gleichen Bezugszeichen versehen.

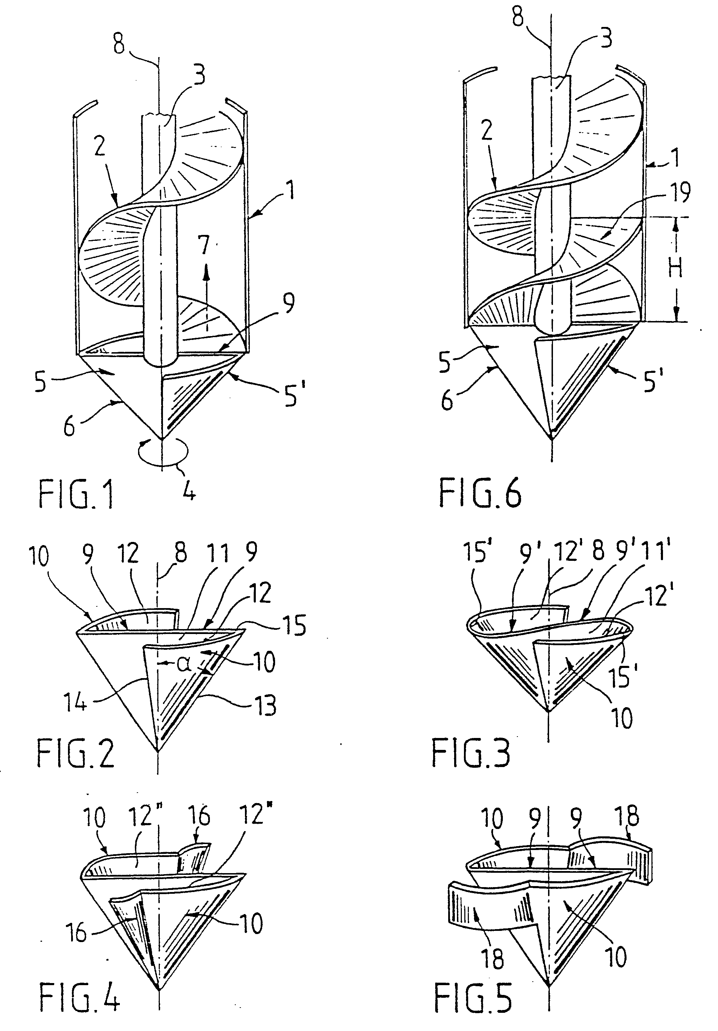

Bei der Grundanordnung nach Fig. 1 ist eine Schnecke 2 in einem Gehäuse 1 angeordnet. Die Schneckenwelle 3 ist in der durch den Pfeil 4 angedeuteten Richtung um die Drehachse 8 herum drehbar und weist an ihrem unteren Ende eine unterhalb des Gehäuses 1 angeordnete, zwei Flügel 5 und 5' umfassende Einzugsvorrichtung 6 auf. Diese ist auf der Schneckenwelle 3 befestigt und dreht sich mit ihr zusammen. Der rechte Flügel 5 ist relativ zum Eingangsende der Schnecke 2 so positioniert, daß die obere Kante ihres Antriebssegmentes 9 die Eingangskante der Schnecke 2 schneidet und relativ zu dieser befestigt ist. Im Betrieb fließt das Produkt in die Einzugsvorrichtung 6 hinein und wird von der letzteren nach oben, in Richtung des Gehäuses 1 gedrückt. Hier wird es durch das Eingangsende der Schnecke 2 übernommen und entlang einer schraubenlinienförmigen Bahn in der Förderrichtung 7 befördert.

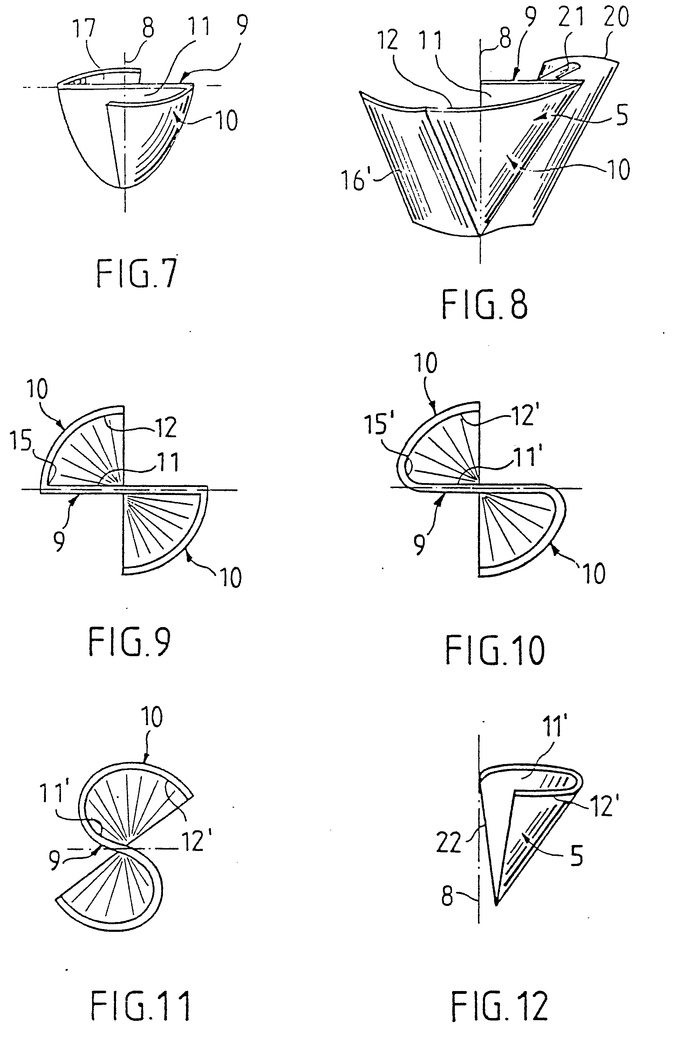

Die in der Fig. 2 in Perspektive und in der Fig. 9 in Draufsicht dargestellte Einzugsvorrichtung weist zwei Flügel mit je einem Antriebssegment 9 und einem Fördersegment 10 auf. Die Antriebssegmente 9, welche sich von der Drehachse 8 im wesentlichen in einer Axialebene erstrecken, bestehen aus je einem ebenen Blech und bilden je eine kontinuierliche ebene Fläche 11. Die Fördersegmente 10 hingegen bestehen aus gekrümmten Blechen und weisen je eine der Drehachse 8 zugewendete, konkave Fläche 12 auf. Das Fördersegment 10 und damit die Fläche 12 ist in axialem Schnitt relativ zur Drehachse 8 um einen spitzen Winkel α geneigt und in einem senkrecht zur Drehachse 8 verlaufenden Querschnitt kreisförmig gekrümmt. Das Fördersegment 10 ist also Teil eines Kegelmantels und schneidet das Antriebssegment 9 in einer geraden Schnittlinie 13, die eine Erzeugende des Kegelmantels ist und relativ zur Drehachse 8 um den besagten Winkel α geneigt ist. Entsprechend ist der Übergang von der Fläche 11 zur Fläche 12 im Querschnitt spitz. Die vorlaufende Kante 14 ist ebenfalls eine Erzeugende des Kegelmantels und schließt mit der Drehachse 8 einen Winkel α ein.

Im Betrieb dringt die vorlaufende Kante 14 in das Produkt hinein und sorgt bei den Flügeln für stetig neue Produktmengen jeweils im Raum zwischen der Fläche 11 und der Fläche 12. Dabei erteilt die Fläche 11 dem Produkt eine Drehbewegung um die Achse 8 herum, wodurch es eine tangentiale Geschwindigkeitskomponente am Umfang eines Kreises und andererseits eine radial nach außen gerichtete Geschwindigkeitskomponente erhält, die zufolge der entstehenden Zentrifugalkraft auftritt und das Produkt gegen die Fläche 12 drückt. Bedingt durch den sich nach oben vergrößernden Radius der Fläche 12 wird das Produkt entlang der letzteren immer noch oben und nach außen bewegt, bis es vom Eingangsende der Schnecke 2 erfaßt und durch die letztere in der Richtung 7 weiter befördert wird. Damit hat die Einzugsvorrichtung ihre Funktion erfüllt. Weitere Produktmengen fließen in die Einzugsvorrichtung auf ähnliche Weise hinein und werden im wesentlichen dem gleichen Beförderungsvorgang unterzogen.

Die Einzugsvorrichtung nach der Fig. 3 ist im Querschnitt S-förmig ausgebildet, wobei die Flächen 12' und die Übergänge 15' von den Flächen 11' zu den Flächen 12' konkav ausgebildet sind.

Eine erste Variante dieser Einzugsvorrichtung ist in der Fig. 10 gezeigt und weist ebene Flächen 11' auf, die über kreisförmige Übergänge 15' mit relativ kleinen Radien in die kreisförmig gekrümmten Flächen 12' übergehen.

Eine zweite Variante der besagten Einzugsvorrichtung ist in Draufsicht in der Fig. 11 gezeigt und weist kreisförmige Flächen 11' und als Verlängerung der letzteren ausgebildete, kreisförmige Flächen 12' auf. Der Radius einer Fläche 11' ist vom Radius einer Fläche 12' verschieden, jedoch gehen sie ohne Unstetigkeit ineinander über und ergeben eine kontinuierliche Fläche.

Mittels der obigen Varianten kann einer Produktstauung, die in spitzen Übergängen in der Praxis bei manchen Produkten auftreten, vorgebeugt werden.

In der Fig. 4 ist an das vorlaufende Ende jeweils eines Fördersegmentes 10 ein nach innen konkaves Vorlaufsegment 16 angeschlossen, welches relativ zum Fördersegment 10 nach außen abgebogen ist. Ein solches Segment, das auch als kontinuierliche Verlängerung, z. B. in tangentialer Richtung, des Fördersegmentes 10 verlaufen kann, dient als Zuführsegment und bewirkt eine Steigerung des Durchsatzes. Es wird ferner eine Verbesserung des Wirkungsgrades des Beförderungsvorganges dadurch erreicht, daß die äußere Fläche des Fördersegmentes 10 entlastet wird und das Produkt nur auf die Fläche 12'' einwirkt.

In der Fig. 5 sind an die Fördersegmente 10 die Vorlaufsegmente 18 angeschlossen, deren Höhe kleiner als die gesamte Höhe der Fördersegmente 10 ist. Diese Vorlaufsegmente 18 sind im oberen, aktiveren Bereich der Fördersegmente 10 als Zuführsegmente wirksam und können bei der Beförderung eines zusammenhängenden Produktes die Loslösung aufeinanderfolgender Schichten des Produktes bewerkstelligen.

In der Fig. 6 ist oberhalb des linken Flügels 5 eine Zusatzschnecke 19 angeordnet. Diese ist ebenfalls auf der Schneckenwelle 3 befestigt und bestreicht auf dieser einen halben Umlauf. Relativ zur Schnecke 2 ist sie um 180° versetzt angeordnet. Die Zusatzschnecke 19 übernimmt aufeinanderfolgende Produktmengen vom linken Flügel 5 und führt diese in das Gehäuse 1 weit genug hinein, daß diese von der Schnecke 2 übernommen werden können und aus dem Gehäuse nicht mehr in die Einzugsvorrichtung 6 zurückfallen. Wenn die Einzugsvorrichtung 6 mehr als zwei Flügel aufweist, können weitere Zusatzschnecken oder mehrgängige Schnecken zum vorgenannten Zweck verwendet werden.

Die Einzugsvorrichtungen 6 können je nach Anwendungsfall mit spitzen, flachen oder gekrümmten Enden ausgebildet sein. Die aktivsten Teile der Fördersegmente sind diejenigen, die sich in unmittelbarer Nähe des Eingangsendes der Schnecke befinden, da ihre radialen Abstände von der Drehachse 8 und damit die auf sie einwirkenden Zentrifugalkräfte hier am größten sind. In der Fig. 7 ist eine Einzugsvorrichtung mit gekrümmtem Ende dargestellt, deren Fördersegmente 10 Flächen 17 besitzen, welche in axialem Schnitt konkav gekrümmt sind. Eine solche Einzugsvorrichtung kann kurz und flach ausgebildet sein, so daß das Produkt auch bei kleiner Schichttiefe mit Erfolg befördert werden kann.

Die Einzugsvorrichtung nach der Fig. 8 besitzt einen einzigen Flügel 5 mit Antriebssegment 9, Fördersegment 10 und Zuführsegment 16'. An der hinteren Seite des Antriebssegmentes 9 ist in einem Abstand von diesem ein Dämpfungsblech 20 mittels zweier Zapfen 21, von denen in der Zeichnung nur einer sichtbar ist, befestigt. Das Dämpfungsblech 20 ist in bezug auf seine Masse und seinen Abstand von der Drehachse 8 so bemessen, daß es die durch den Flügel 5 erzeugten, auf die Schneckenwelle 3 exzentrisch einwirkenden Kräfte ausgleicht und damit eine Dämpfung der dadurch ausgelösten Schwingungen bewerkstelligt. Diese Ausführungsform ermöglicht zugleich einen verbesserten Fluß des Produktes in die Einzugsvorrichtung.

Besonders, aber nicht nur in diesem Fall mit einem einzigen Flügel 5, ist es nicht nötig, daß die von der Schnecken-Drehachse 8 abgewendete Fläche 11 diese Schnecken-Drehachse 8 berührt. Sie kann in einem Abstand davon angeordnet sein.

Bei einigen der vorangehend beschriebenen Ausführungsformen kann es von bedeutendem Vorteil sein, das Antriebssegment so zu neigen bzw. zu krümmen, daß seine Fläche in einem zur Drehachse parallelen Schnitt so verläuft, daß die Entfernung der in der Schnittebene liegenden Flächenelemente von der Drehachse in Richtung zur Schnecke abnimmt. Dadurch kann den Produktteilchen schon an der Fläche des Antriebssegmentes eine Bewegungskomponente in Richtung zur Schnecke erteilt werden. Ein Beispiel dafür ist in der Fig. 12 dargestellt. Diese Einzugsvorrichtung hat einen einzigen Flügel 5. Wie in der Variante der Fig. 11 geht die gekrümmte Fläche 11' in die gekrümmte Fläche 12' des Fördersegmentes über. Das untere Ende der Kante 22 der Fläche 11' ist von der Drehachse 8 entfernt, während ihr oberes Ende auf dieser Drehachse 8 liegt.

**Patentansprüche**

1. Entladevorrichtung zur insbesondere etwa senkrechten Förderung von Schüttgütern mit einem zylindrischen Gehäuse (1), einer sich in diesem drehenden Förderschnecke (2) und einer über das Gehäuse (1) axial vorstehenden, am Eingangsende der Schnecke (2) angeordneten, sich mit dieser zusammen drehenden, sich zur Schnecke hin im wesentlichen konisch erweiternden Einzugsvorrichtung (6) zum Einziehen des Schüttgutes in die Schnecke (2), dadurch gekennzeichnet, daß die Einzugsvorrichtung (6) mindestens einen Flügel (5, 5') mit einem sich von der Drehachse (8) im wesentlichen in einer Axialebene erstreckenden, eine kontinuierliche Fläche bildenden Antriebssegment (9, 9') und einem sich radial außen an dieses anschließenden Fördersegment (10) besitzt, welches sich vom radial äußeren Ende des Antriebssegmentes (9, 9') entlang einer um die Drehachse (8) gekrümmten, im wesentlichen konischen Fläche in Drehrichtung erstreckt, radial nicht über die Stirnkante des Gehäuses (1) hinausgeht und an dieser mündet, wobei der Konuswinkel bzw. der mittlere Konuswinkel im Verhältnis zur Betriebsdrehzahl so groß ist, daß dem von dem Antriebssegment (9, 9') in Drehung versetzten Schüttgut an dem Fördersegment (10) eine Bewegung in Richtung der Schnecke (2) erteilt wird.

2. Entladevorrichtung nach Anspruch 1, dadurch gekennzeichnet, daß die der Schnecke (2) zugewandte Kante des Antriebssegmentes (9, 9') im Bereich des Eingangsendes der Schnecke (2) liegt.

3. Entladevorrichtung nach Anspruch 1 oder 2, dadurch gekennzeichnet, daß die Fläche (11) des Antriebssegmentes (9, 9') eben ist.

4. Entladevorrichtung nach Anspruch 1 oder 2, dadurch gekennzeichnet, daß die Fläche (11') des Antriebssegmentes (9, 9') in einem senkrecht zur Drehachse (8) verlaufenden Querschnitt leicht konkav gekrümmt ist.

5. Entladevorrichtung nach einem der vorhergehenden Ansprüche, dadurch gekennzeichnet, daß die Fläche (12, 12', 12") des Fördersegmentes (10) kegelförmig ausgebildet ist, wobei die Drehachse und die Kegelachse zusammenfallen.

6. Entladevorrichtung nach Anspruch 1 bis 4, dadurch gekennzeichnet, daß die Fläche (17) des Fördersegmentes (10) im axialen Schnitt relativ zur Drehachse (8) konkav, vorzugsweise kreisförmig gekrümmt ist.

7. Entladevorrichtung nach einem der vorhergehenden Ansprüche, dadurch gekennzeichnet, daß der Übergang (15) des Antriebssegmentes (9, 9') in das Fördersegment (10) in einem senkrecht zur Drehachse (8) verlaufenden Querschnitt eckig ist.

8. Entladevorrichtung nach einem der Ansprüche 1 bis 6, dadurch gekennzeichnet, daß der Übergang (15') des Antriebssegmentes (9, 9') in das Fördersegment (10) in einem senkrecht zur Drehachse (8) verlaufenden Querschnitt konkav gekrümmt ist.

9. Entladevorrichtung nach Anspruch 8, dadurch gekennzeichnet, daß das Fördersegment (10) stetig in das Antriebssegment (9, 9') übergeht.

10. Entladevorrichtung nach einem der vorhergehenden Ansprüche, dadurch gekennzeichnet, daß an das vorlaufende Ende des Fördersegmentes (10) ein Vorlaufsegment (16, 16', 18) angeschlossen ist.

11. Entladevorrichtung nach Anspruch 10, dadurch gekennzeichnet, daß das Vorlaufsegment (16, 16', 18) als Verlängerung des Fördersegmentes (10) ausgebildet ist.

12. Entladevorrichtung nach Anspruch 10 oder 11, dadurch gekennzeichnet, daß das Vorlaufsegment (16, 16', 18) mit dem Fördersegment (10) in einem senkrecht zur Drehachse (8) verlaufenden Querschnitt einen Winkel bildet derart, daß sein freies Ende weiter von der Drehachse entfernt ist als sein Ansatz am Fördersegment.

13. Entladevorrichtung nach einem der Ansprüche 10 bis 12, dadurch gekennzeichnet, daß die Höhenabmessung des Vorlaufsegmentes (16, 16') in der Größenordnung der Höhenabmessung des Fördersegmentes (10) liegt.

14. Entladevorrichtung nach einem der Ansprüche 10 bis 12, dadurch gekennzeichnet, daß die Höhenabmessung des Vorlaufsegmentes (18) kleiner als die Höhenabmessung des Fördersegmentes (10) ist und daß das Vorlaufsegment (18) angrenzend an die Schnecke (2) angeordnet ist.

15. Entladevorrichtung nach einem der vorhergehenden Ansprüche, bei welcher die Einzugsvorrichtung nur einen aus Antriebs- und Fördersegment bestehenden Flügel aufweist, dadurch gekennzeichnet, daß auf der dem Flügel (5) abgewandten Seite des Antriebssegmentes (9) zum Ausgleich der durch den Flügel (5) erzeugten einseitigen Kräfte und zur Dämpfung der durch diese bedingten Schwingungen ein Dämpferblech (20) angeordnet ist.

16. Entladevorrichtung nach einem der Ansprüche 1 bis 14, dadurch gekennzeichnet, daß diametral gegenüberliegend an der Welle (3) der Förderschnecke (2) zwei jeweils aus Antriebs- und Fördersegment bestehende Flügel (5, 5') angeordnet sind.

17. Entladevorrichtung nach Anspruch 16, dadurch gekennzeichnet, daß jedem der Flügel (5, 5') auf der Schneckenwelle (3) eine Schnecke (2, 19) zugeordnet ist, wobei die beiden Schnecken im Gehäuse (1) gemeinsam drehbar gelagert und relativ zueinander in Umfangsrichtung versetzt angeordnet sind.

## Claims

1. Unloading apparatus for conveying bulk materials, in particular in an approximately vertical direction, the apparatus comprising a cylindrical housing (1), a conveyor screw (2) rotating in this housing and an intake device (6) for drawing the bulk material into the screw (2), with the intake device projecting axially beyond the housing (1), being arranged at the input end of the screw (2), rotating together with the screw and diverging substantially conically in the direction towards the screw, characterized in that the intake device (6) has at least one wing (5, 5') with a drive segment (9, 9') extending from the axis of rotation (8) substantially in an axial plane and forming a continuous surface, and with a forwarding segment (10) which adjoins the drive segment radially outwardly thereof, which extends from the radially outer end of the drive segment (9, 9') in the direction of rotation along a substantially conical surface curved about the axis of rotation, which does not project radially beyond the edge of the end face of the housing (1) and which opens at this edge, with the cone angle, or the mean cone angle, being so large in relationship to the operational speed of rotation that a movement in the direction of the screw (2) is imparted at the forwarding segment (10) to the bulk material set in rotation by the drive segment (9, 9').

2. Unloading apparatus in accordance with claim 1 and characterized in that the edge of the drive segment (9, 9') facing the screw (2) lies in the region of the intake end of the screw (2).

3. Unloading apparatus in accordance with claim 1 or claim 2 and characterized in that the surface (11) of the drive segment (9, 9') is flat.

4. Unloading apparatus in accordance with claim 1 or claim 2 and characterized in that the surface (11') of the drive segment (9, 9') is slightly concavely curved in a transverse section extending perpendicular to the axis of rotation (8).

5. Unloading apparatus in accordance with one of the preceding claims and characterized in that the surface (12, 12', 12'') of the forwarding segment (10) is of cone-like shape with the axis of rotation and the cone axis being coincident.

6. Unloading apparatus in accordance with claims 1 to 4 and characterized in that the surface (17) of the forwarding segment (10) is of concave curvature, and preferably circular curvature in the axial section relative to the axis of rotation (8).

7. Unloading apparatus in accordance with one of the preceding claims and characterized in that the transition (15) from the drive segment (9, 9') to the forwarding segment (10) is corner shaped in a transverse section extending perpendicular to the axis of rotation (8).

8. Unloading apparatus in accordance with one of the claims 1 to 6 and characterized in that the transition (15') from the drive segment (9, 9') to the forwarding segment (10) is of concave curvature in a transverse section extending perpendicular to the axis of rotation (8).

9. Unloading apparatus in accordance with claim 8 and characterized in that the forwarding segment (10) merges gradually into the drive segment (9, 9').

10. Unloading apparatus in accordance with one of the preceding claims and characterized in that a leading segment (16, 16', 18) is connected to the leading end of the forwarding segment (10).

11. Unloading apparatus in accordance with claim 10 and characterized in that the leading segment (16, 16', 18) is formed as an extension of the forwarding segment (10).

12. Unloading apparatus in accordance with claim 10 or 11 and characterized in that the leading segment (16, 16', 18) forms an angle with the forwarding segment (10), in a transverse section extending perpendicular to the axis of rotation (8), such that its free end is further removed from the axis of rotation than its attachment to the forwarding segment.

13. Unloading apparatus in accordance with one of the claims 10 to 12 and characterized in that the vertical dimension of the leading segment (16, 16') lies in the order of magnitude of the vertical dimension of the forwarding segment (10).

14. Unloading apparatus in accordance with one of the claims 10 to 12 and characterized in that the vertical dimension of the leading segment (18) is smaller than the vertical dimension of the forwarding segment (10), and in that the leading segment (18) is arranged adjacent the screw (2).

15. Unloading apparatus in accordance with one of the preceding claims in which the intake device has only one wing consisting of drive and forwarding segments, characterized in that a sheet metal damper (20) is arranged on the side of the drive segment (9) facing away from the wing (5) to compensate for the uni-directional forces generated by the wing (5) and to damp the oscillations created thereby.

16. Unloading apparatus in accordance with one of the claims 1 to 14 and characterized in that two wings (5, 5') each consisting of drive and forwarding segments are arranged diametrically opposite one another on the shaft (3) of the conveyor screw (2).

17. Unloading apparatus in accordance with claim 16 and characterized in that a screw on the screw shaft (3) is associated with each of the wings (5, 5'), with the two screws being journalled for joint rotation within the housing (1) and being displaced relative to one another in the peripheral direction.

**Revendications**

1. Dispositif de déchargement pour le transport, en particulier à peu près vertical, de matières en vrac, comprenant un boîtier cylindrique (1), une hélice transporteuse (2) tournant dans ce boîtier et un dispositif introducteur (6) dépassant axialement du boîtier (1), disposé à l'extrémité d'entrée de l'hélice (2), tournant en compagnie de cette dernière et s'élargissant sensiblement coniquement vers l'hélice, pour introduire la matière en vrac dans l'hélice (2), caractérisé en ce que le dispositif introducteur (6) comporte au moins une ailette (5, 5') comprenant un segment de commande (9, 9') formant une surface continue et s'étendant sensiblement dans un plan axial à partir de l'axe de rotation (8), ainsi qu'un segment transporteur (10) s'y raccordant radialement extérieurement, qui s'étend dans le sens de rotation depuis l'extrémité radialement externe du segment de commande (9, 9'), le long d'une surface sensiblement conique recourbée autour de l'axe de rotation (8), qui radialement ne sort pas au-delà du bord avant du boîtier (1) et débouche sur ce bord, l'angle de cône ou l'angle de cône moyen étant alors d'une telle grandeur par rapport au nombre de tours de fonctionnement qu'un mouvement dans la direction de l'hélice (2) est imparti à la matière en vrac se trouvant sur le segment de transport (10) et mise en rotation par le segment de commande (9, 9').

2. Dispositif selon la revendication 1, caractérisé en ce que le bord tourné vers l'hélice (2) du segment de commande (9, 9') se trouve dans la zone de l'extrémité d'entrée de l'hélice (2).

3. Dispositif selon la revendication 1 ou 2, caractérisé en ce que la face (11) du segment de commande (9, 9') est plane.

4. Dispositif selon la revendication 1 ou 2, caractérisé en ce que la face (11') du segment de commande (9, 9') est recourbée de façon légèrement concave dans une section transversale s'étendant perpendiculairement à l'axe de rotation (8).

5. Dispositif selon l'une des revendications précédentes, caractérisé en ce que la face (12, 12', 12'') du segment de transport (10) est conformée comme un cône, l'axe de rotation et l'axe du cône étant alors en coïncidence.

6. Dispositif selon la revendication 1 à 4, caractérisé en ce que la surface (17) du segment de transport (10) est recourbée de façon concave, de préférence circulaire en section axiale par rapport à l'axe de rotation (8).

7. Dispositif selon l'une des revendications précédentes, caractérisé en ce que le passage (15) du segment de commande (9, 9') dans le segment de transport (10) est anguleux dans une coupe transversale s'étendant perpendiculairement à l'axe de rotation (8).

8. Dispositif selon l'une des revendications 1 à 6, caractérisé en ce que le passage (15') du segment de commande (9, 9') dans le segment de transport (10) est recourbé de façon concave dans une section transversale s'étendant perpendiculairement à l'axe de rotation (8).

9. Dispositif selon la revendication 8, caractérisé en ce que le segment de transport (10) passe progressivement dans le segment de commande (9, 9').

10. Dispositif selon l'une des revendications précédentes, caractérisé en ce qu'un segment d'amorçage (16, 16', 18) est raccordé sur l'extrémité entrante du segment de transport (10).

11. Dispositif selon la revendication 10, caractérisé en ce que le segment d'amorçage (16, 16', 18) est conformé comme un prolongement du segment de transport (10).

12. Dispositif selon la revendication 10 ou 11, caractérisé en ce que le segment d'amorçage (16, 16', 18) forme avec le segment de transport (10), dans une section transversale s'étendant perpendiculairement à l'axe de rotation (8), un angle de telle sorte que son extrémité libre soit davantage éloignée de l'axe de rotation que son rattachement sur le segment de transport.

13. Dispositif selon l'une des revendications 10 à 12, caractérisé en ce que la dimension en hauteur du segment d'amorçage (16, 16') se trouve de l'ordre de grandeur de la dimension en hauteur du segment de transport (10).

14. Dispositif selon l'une des revendications 10 à 12, caractérisé en ce que la dimension en hauteur du segment d'amorçage (18) est plus faible que la dimension en hauteur du segment de transport (10) et en ce que le segment d'amorçage (18) est disposé au voisinage de l'hélice (2).

15. Dispositif selon l'une des revendications précédentes dans lequel le dispositif introducteur ne comporte qu'une ailette constituée par le segment de commande et le segment de transport, caractérisé en ce que sur le côté tourné à l'opposé de l'ailette (5), du segment de commande (9), on dispose une tôle amortisseuse (20) pour équilibrer les forces unilatérales produites par l'ailette (5) et pour amortir les oscillations provoquées par celles-ci.

16. Dispositif selon l'une des revendications 1 à 14, caractérisé en ce que sur l'arbre (3) de l'hélice transporteuse (2) sont disposées diamétralement en face l'une de l'autre deux ailettes (5, 5′) constituées respectivement d'un segment de commande et d'un segment transporteur.

17. Dispositif selon la revendication 16, caractérisé en ce qu'à chaque ailette (5, 5′) est associée une hélice (2, 19) sur l'arbre d'hélice (3), les deux hélices étant montées en commun pour pouvoir tourner dans le boîtier (1) et étant disposées de manière à être décalées relativement l'une à l'autre dans la direction périphérique.

FIG.1

FIG.6

FIG.2

FIG.3

FIG.4

FIG.5

FIG.7

FIG.8

FIG.9

FIG.10

FIG.11

FIG.12

2